# EUROPÄISCHE PATENTSCHRIFT

(11) **EP 3 307 110 B1**
(45) Veröffentlichungstag und Bekanntmachung des Hinweises auf die Patenterteilung: **17.04.2019**
(21) Anmeldenummer: 16727722.7
(22) Anmeldetag: 08.06.2016
(51) Int. Cl.: A47B 88/477, F24C 15/16

(54) **AUSZUGSFÜHRUNG UND HAUSHALTSGERÄT**
PULL-OUT GUIDE AND DOMESTIC APPLIANCE
DISPOSITIF DE GUIDAGE DE COULISSE ET APPAREIL ÉLECTROMÉNAGER

(30) Priorität: 11.06.2015 DE 202015103067 U
(43) Veröffentlichungstag der Anmeldung: 18.04.2018
(73) Patentinhaber: Paul Hettich GmbH & Co. KG, 32278 Kirchlengern (DE)
(72) Erfinder: REHAGE, Daniel, 09137 Chemnitz (DE); REIDT, Daniel, 32052 Herford (DE); MEYER, Friedrich, 49163 Bohmte (DE); FROBIETER, Edgar, 49205 Hasbergen (DE); VÖLKER, Michael, 32278 Kirchlengern (DE)
(74) Vertreter: Dantz, Jan Henning
(86) Internationale Anmeldenummer: PCT/EP2016/063076
(87) Internationale Veröffentlichungsnummer: WO 2016/198479

(56) Entgegenhaltungen:
- EP-A2- 1 158 185
- DE-A1-102005 021 565
- DE-U1- 9 310 582

## Beschreibung

Die vorliegende Erfindung betrifft eine Auszugsführung, insbesondere für Haushaltsgeräte, nach dem Oberbegriff des Anspruches 1.

Die DE 20 2006 009 809 U1 offenbart eine Auszugsführung mit einer Laufschiene, an der ein Formteil formschlüssig festgeklemmt ist, das die Laufschiene an der Oberseite überragt und einen Anschlag für einen Gargutträger ausbildet. Bei solchen Anschlägen, die auch als Stopfen ausgebildet sein können, besteht das Problem, dass beim Öffnen oder Schließen laute Anschlaggeräusche durch aufliegende Backbleche erzeugt werden können. Dies verunsichert den Benutzer, da nicht sofort erkennbar ist, ob das Geräusch auf einer Fehlbedienung basiert.

Die DE 20 2008 006 755 U1 offenbart einen Dämpfer zum Abbremsen der Bewegung einer Laufschiene relativ zu einer Mittelschiene. Als Dämpfer wird ein Faltenbalg eingesetzt, so dass die Verfahrbewegung der Laufschiene abgebremst wird. Ein solches Abbremsen der Bewegung der Laufschiene könnte zwar laute Anschlaggeräusche vermeiden, allerdings ist der Einsatz eines Faltenbalges wegen der Hitze in Backöfen und möglicher Verunreinigungen ungeeignet. Zudem können bei einem zu abrupten Abbremsen der Laufschiene die Anschlaggeräusche ebenfalls auftreten.

Die DE 93 10 582 U1 offenbart eine Rasteinrichtung zum lösbaren Befestigen eines Schubes an einer Führungsschiene einer Auszugsführung, die ein an der Führungsschiene angebrachtes Rastelement aufweist. Die Auszugsführung offenbart die Merkmale des Oberbegriffes des Anspruches 1.

Es ist daher Aufgabe der vorliegenden Erfindung, eine Auszugsführung sowie ein Haushaltsgerät zu schaffen, die im Hinblick auf die obigen Probleme eine komfortablere Handhabung gewährleisten.

Diese Aufgabe wird mit einer Auszugsführung mit den Merkmalen des Anspruchs 1 sowie einem Haushaltsgerät mit den Merkmalen des Anspruchs 11 gelöst.

Bei der erfindungsgemäßen Auszugsführung ist der mindestens eine Anschlag für das Schubelement federnd ausgebildet. Dadurch kann bei einer schnellen Verfahrbewegung der Laufschiene der Auszugsführung und einem abrupten Anhalten ein auf der Laufschiene befindliches Schubelement über den federnden Anschlag abgebremst werden, ohne dass laute Anschlaggeräusche entstehen. Dies verbessert die Handhabung der Auszugsführung und führt zu einer Verringerung des Verschleißes an den Kontaktstellen.

Vorzugsweise ist der Federweg eines federnden Anschlagselementes beim Aufprall des Schubelementes so ausgebildet, dass dieser in einem Bereich zwischen 0,5 mm bis 10 mm, insbesondere 1 mm bis 8 mm, liegt. Dabei kann je nach Einsatzzweck der Auszugsführung davon ausgegangen werden, dass das Schubelement im beladenen Zustand beispielsweise zwischen 1 kg bis 6 kg Gewicht besitzt und mit einer Geschwindigkeit zwischen 0,5 bis 2 m/s bewegt wird, um dann abrupt angehalten zu werden. In diesem Fall soll das federnde Anschlagselement bewegt werden, um das Schubelement über eine gewisse Wegstrecke des Federweges abzubremsen.

Vorzugsweise ist der Anschlag aus einem Metallblech hergestellt. Dadurch kann der Anschlag auch bei Haushaltsgeräten, wie Backöfen, eingesetzt werden.

In einer weiteren Ausgestaltung ist der Anschlag an einer Stirnseite der Laufschiene fixiert. Dadurch kann der Anschlag einerseits die Abbremsfunktion für das Schubelement und andererseits eine Abdeckung für die Laufschiene bilden, um ein Innenleben der Auszugsführung besser vor Verunreinigungen zu schützen. Desweiteren kann der federnde Anschlag auch als elastische Wegbegrenzung für die Relativbewegung der Laufschiene zur Führungsschiene oder Mittelschiene genutzt werden, indem der Anschlag z.B. beim Einfahren der Laufschiene in das Haushaltsgerät an der Stirnseite der Führungsschiene oder Mittelschiene zur Anlage kommt, wenn die Endstellung erreicht ist.

Wenn das Schubelement sowohl in Auszugs- als auch in Einzugsrichtung abgebremst werden soll, kann an gegenüberliegenden Seiten der Laufschiene jeweils ein federnder Anschlag vorgesehen sein.

Der Anschlag kann an der Laufschiene verschweißt, verrastet oder auf andere Weise mechanisch oder über Klebemittel befestigt sein.

Erfindungsgemäß ist der federnde Anschlag der Auszugsführung integral mit einem Rastmechanismus zum lösbaren Fixieren der Laufschiene in einer Auszugsposition ausgebildet. Dadurch kann die Anzahl der Bauteile für die Auszugsführung gering gehalten werden.

Erfindungsgemäß wird die Auszugsführung bei einem Haushaltsgerät eingesetzt, wobei vorzugsweise an gegenüberliegenden Seiten des Schubelementes je eine Auszugsführung vorgesehen ist, und nur eine der beiden Auszugsführungen einen federnden Anschlag aufweist. Es hat sich herausgestellt, dass ein federnder Anschlag schon ausreichend ist, um das Schubelement abzubremsen. Optional können natürlich beide Auszugsführungen jeweils einen oder zwei federnde Anschläge aufweisen.

Die Erfindung wird nachfolgend anhand mehrerer Ausführungsbeispiele mit Bezug auf die beigefügten Zeichnungen näher erläutert. Es zeigen:

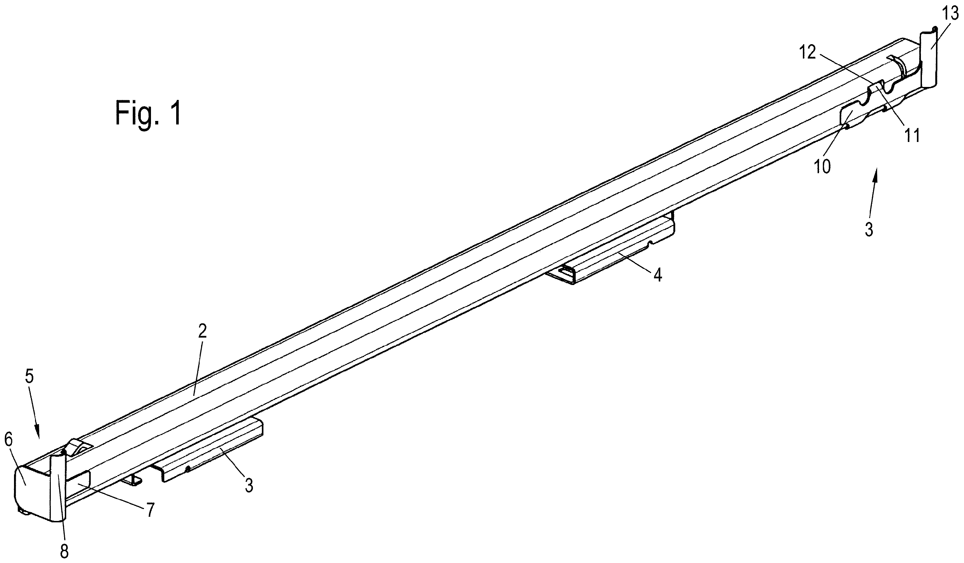

- Figur 1: eine perspektivische Ansicht einer erfindungsgemäßen Auszugsführung;
- Figur 2: eine perspektivische Ansicht der Auszugsführung der Figur 1 mit einem Gargutträger;
- Figuren 3 und 4: zwei Ansichten der Auszugsführung der Figur 2 in unterschiedlichen Belastungsfällen;
- Figuren 5A und 5B: zwei Ansichten einer erfindungsgemäßen Auszugsführung mit einem modifizierten Anschlag;
- Figur 6: eine perspektivische Ansicht des Anschlags der Figur 5;
- Figur 7: eine Detailansicht einer Auszugsführung mit einem weiteren Ausführungsbeispiel eines Anschlages;
- Figur 8: eine Rückansicht der Auszugsführung der Figur 7,
- Figur 9: eine Draufsicht auf die Auszugsführung der Figur 7;
- Figur 10: eine vergrößerte Ansicht der Auszugsführung der Figur 7 in einer federnden Anschlagsposition;
- Figur 11: eine Detailansicht des Anschlages der Auszugsführung der Figur 7;
- Figur 12: eine Ansicht eines modifizierten Anschlages für eine Auszugsführung;
- Figur 13: eine perspektivische Ansicht eines modifizierten Anschlages für eine Auszugsführung, und
- Figuren 14A und 14B: zwei Ansichten eines modifizierten Anschlages für eine Auszugsführung.

Eine Auszugsführung umfasst eine Führungsschiene, die an einem Korpus eines Möbels oder eines Haushaltsgerätes oder an einem anderen Bauteil festlegbar ist. An der Führungsschiene ist eine Laufschiene 2 linear verfahrbar gelagert, beispielsweise über Wälzkörper oder Gleitelemente, wobei zwischen der Führungsschiene und der Laufschiene 2 optional eine oder mehrere Mittelschienen vorgesehen sein können. Die Auszugsführung kann somit als Teilauszug oder als Vollauszug ausgebildet sein.

Die Auszugsführung ist an der stationären Führungsschiene über ein vorderes Befestigungsteil 3 und ein hinteres Befestigungsteil 4 festlegbar, beispielsweise an einem Stab eines Seitengitters in einem Backofen. Solche Befestigungsteile 3 und 4, die eine Stange eines Seitengitters klammerartig umgreifen, sind bekannt und werden daher nicht im Detail erläutert.

An der Laufschiene 2 der Auszugsführung ist an der vorderen Stirnseite ein Anschlag 5 angeordnet, der eine plattenförmige Abdeckung 6 aufweist, und ein über die Oberseite der Laufschiene 2 hervorstehendes federndes Anschlagselement 8 in Form eines biegbaren Steges. Ferner ist ein Haltesteg 7 an dem Anschlag 5 ausgebildet, der an der Laufschiene 2 festlegbar ist, beispielsweise mechanisch oder durch Schweißen oder Kleben.

An der hinteren Seite der Laufschiene 2 ist ein Rastmechanismus vorgesehen, der über einen Halteabschnitt 10 an einer Seite der Laufschiene 2 fixiert ist, beispielsweise durch Schweißen. Der Rastmechanismus weist einen Vorsprung 11 auf, der in eine Aussparung 12 an der Laufschiene 2 eingreift und dort zwischen zwei Wälzkörpern in einer maximalen Auszugsposition verrastbar ist. Der Rastmechanismus weist ferner ein integral ausgebildetes federndes Anschlagselement 13 auf, das über die Oberseite der Laufschiene 2 hervorsteht und ein Schubelement, das auf der Laufschiene 2 positioniert ist, in der gewünschten Position hält. Das Schubelement ist dabei zwischen den federnden Anschlagselementen 8 und 13 positioniert.

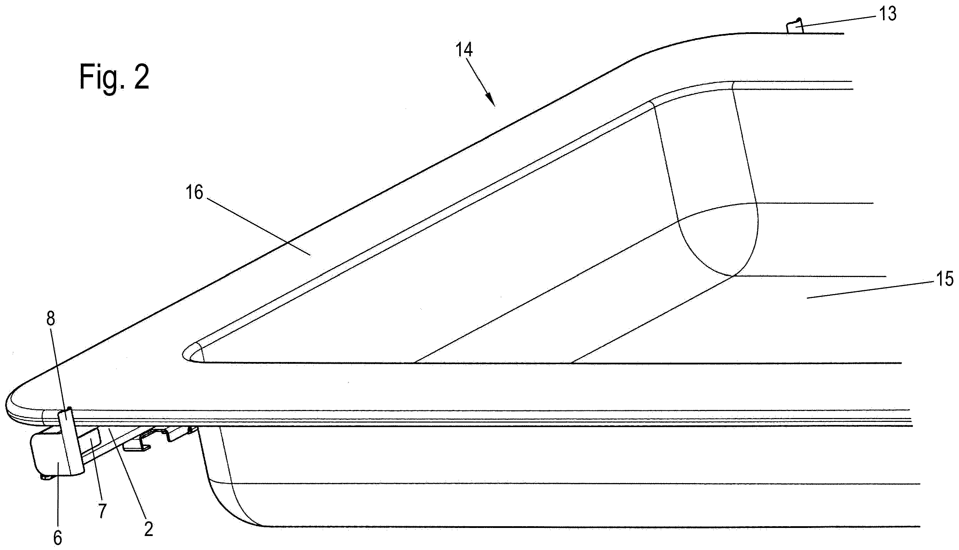

In Figur 2 ist die Auszugsführung gezeigt, auf der nun ein Schubelement 14 in Form eines Gargutträgers mit einer schalenförmigen Wanne 15 und einem seitlich hervorstehenden Rand 16 aufliegt. Der Rand 16 ist auf der Oberseite der Laufschiene 2 abgestützt und zwischen den federnden Anschlagselementen 8 und 13 angeordnet.

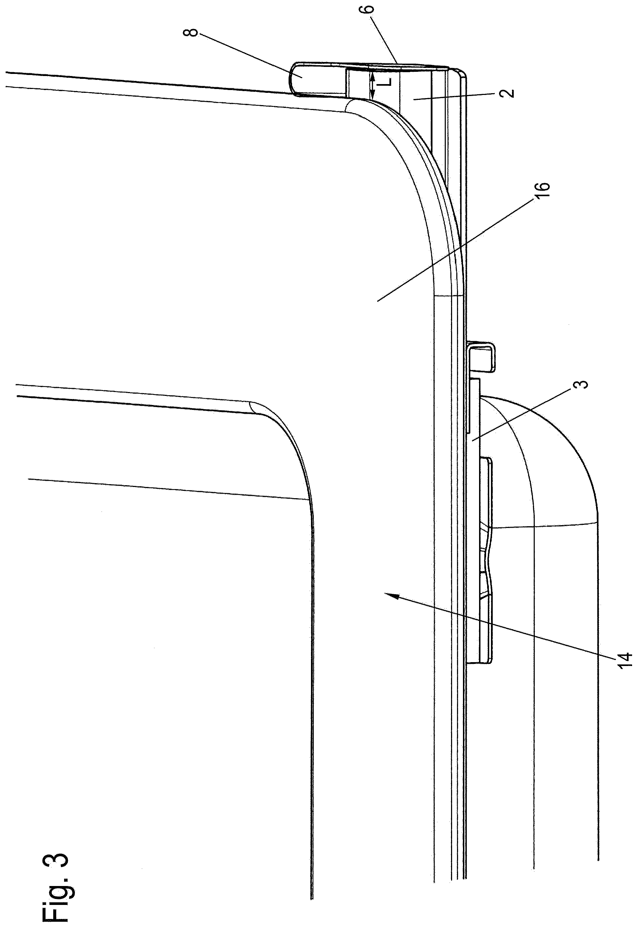

In Figur 3 ist das federnde Anschlagselement 8 des Anschlages 5 in einer unbelasteten Position gezeigt. Der Rand 16 liegt an dem federnden Anschlagselement 8 an, das in einem Abstand L von einer Stirnseite der Laufschiene 2 positioniert ist.

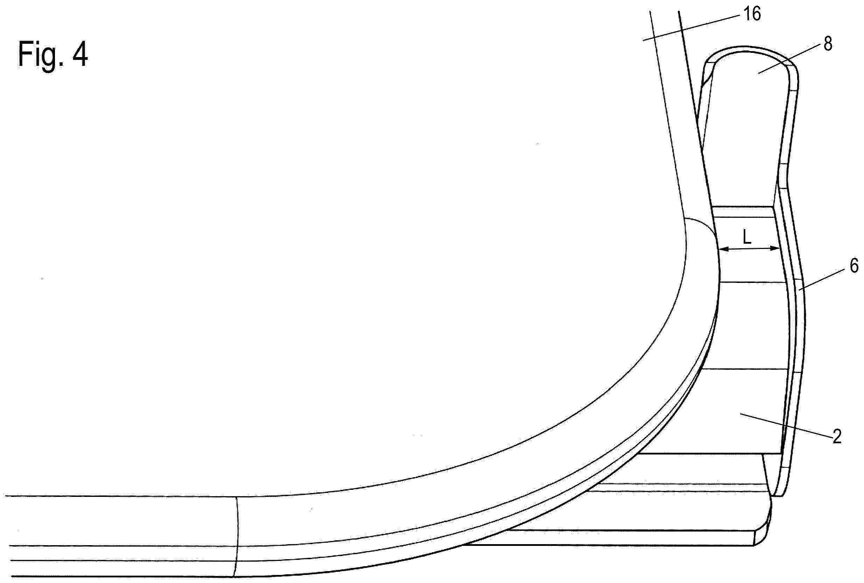

Wird das Schubelement nun schnell in Öffnungsrichtung bewegt bis in eine maximale Auszugsposition und dann abrupt abgebremst, kann der Rand 16 des Schubelementes das federnde Anschlagselement 8 verbiegen, wie dies in Figur 4 dargestellt ist. Dadurch wird der Abstand zwischen dem Rand 16 und einer Stirnseite der Laufschiene 2 auf das Maß I verkürzt, wobei der Federweg des Anschlagselementes 8 in einem Bereich von beispielsweise 1 mm bis 8 mm liegen kann.

Der Anschlag 5 kann aus einem gebogenen Metallblech hergestellt sein, und das Anschlagselement 8 kann dementsprechend federnd sein ,wobei es für die federnde Ausbildung möglich ist, Biegekräfte, Torsionskräfte oder andere Kräfte zu nutzen, um eine gewisse Federung des hervorstehenden Anschlagselementes 8 bereitzustellen.

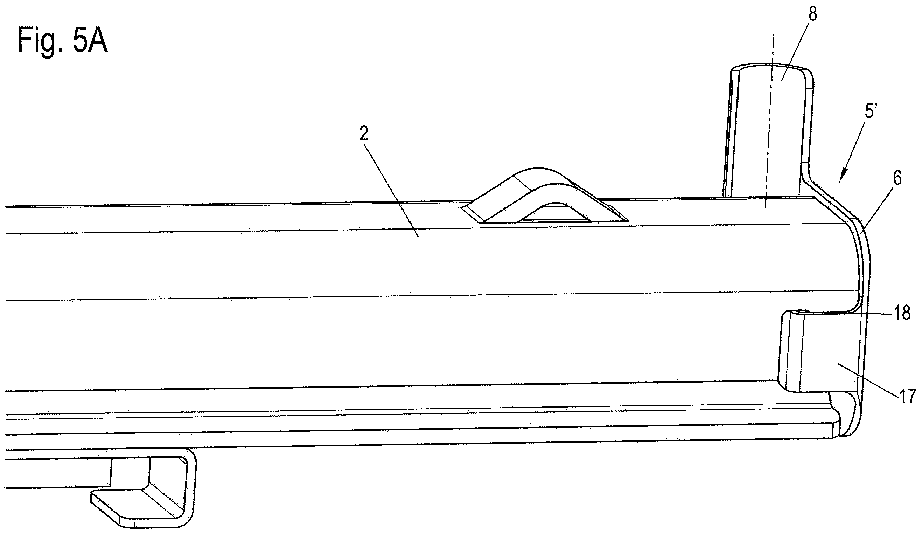

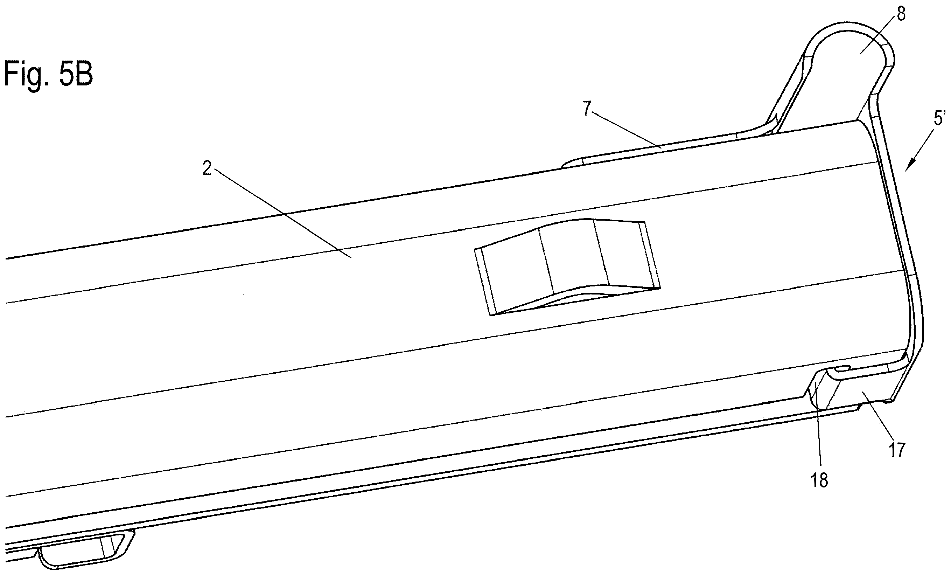

In den Figuren 5A und 5B ist ein modifizierter Anschlag 5' gezeigt, der ähnlich zu dem vorangegangen Ausführungsbeispiel mittels dem Haltesteg 7 an der Laufschiene 2 befestigt ist. Zusätzlich ist an der Abdeckung 6 ein Haken 17 angeformt, der mit einem Vorsprung 18 in eine Aussparung an einer Seite der Laufschiene 2 eingreift. Die Aussparung ist dabei so groß dimensioniert, dass der Vorsprung 18 sich innerhalb der Aussparung in begrenztem Maße bewegen kann. Das federnde Anschlagselement 8 kann wie bei dem vorangegangenen Ausführungsbeispiel für ein Abbremsen des Schubelementes 14 sorgen. Der Vorsprung 18 kommt dabei bei einer maximalen elastischen Auslenkung zum Anschlag an einer Kante innerhalb der Aussparung der Laufschiene 2, so dass eine plastische Verformung des Anschlages 5' vermieden wird.

In einer weiteren Ausgestaltung der Erfindung ist es auch möglich, dass der Anschlag formschlüssig an der Laufschiene verrastet ist, so dass eine weitere stoffschlüssige oder mechanische Verbindung entfällt.

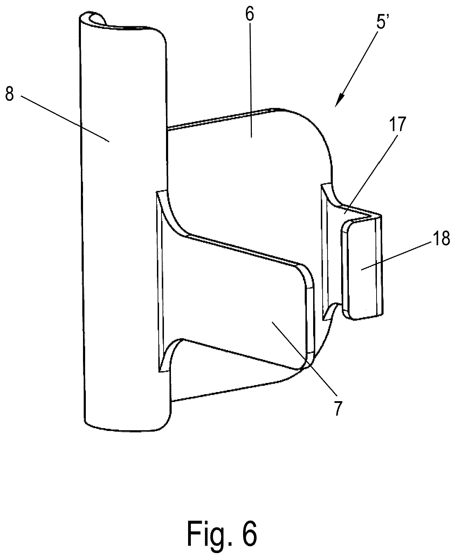

In Figur 6 ist der Anschlag 5' im Detail gezeigt, wobei der Anschlag 5' aus einem gebogenen und gestanzten Metallblech hergestellt ist. Auch eine Herstellung aus einem biegbaren Kunststoff ist möglich.

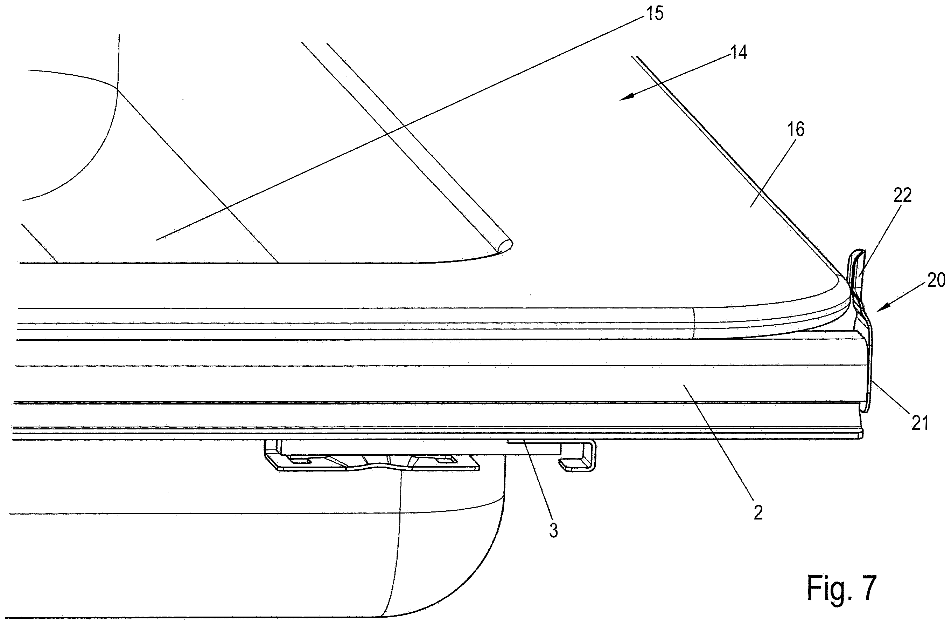

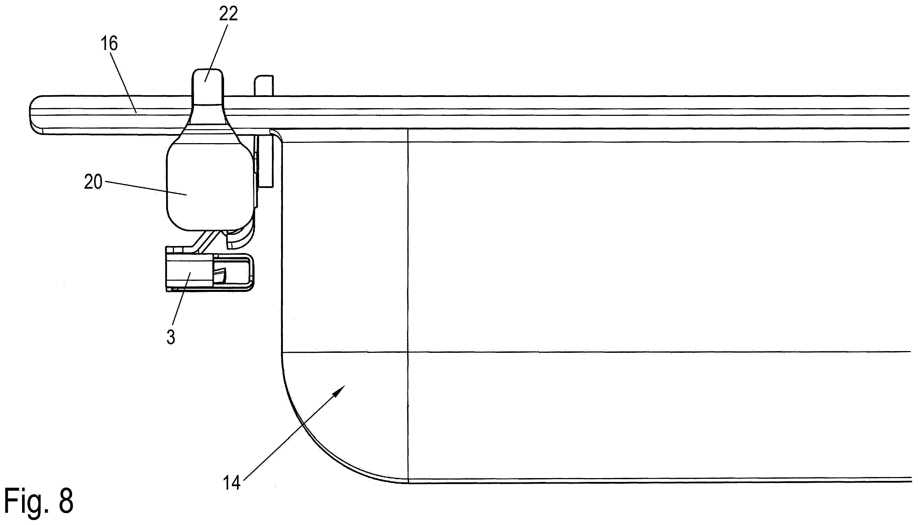

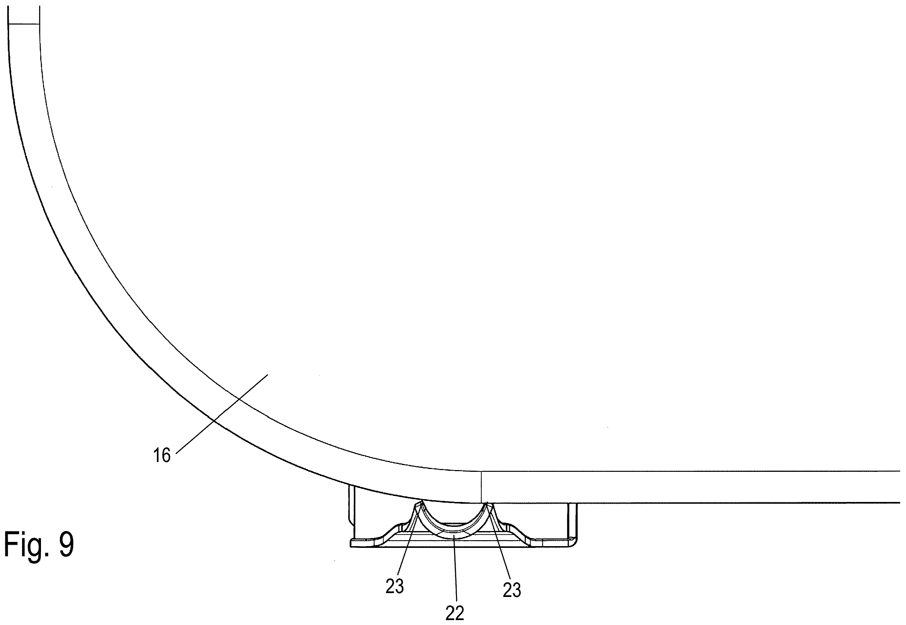

In den Figuren 7 bis 9 ist ein modifizierter Anschlag 20 gezeigt, der an einer Laufschiene 2 fixiert ist. Der Anschlag 20 kann dabei sowohl an einer vorderen als auch einer rückwärtigen Stirnseite der Laufschiene 2 oder nur an einer der beiden Seiten fixiert sein. Der Anschlag 20 umfasst eine plattenförmige Abdeckung 21, die eine offene Stirnseite der Laufschiene 2 verschließt. Die Abdeckung 21 kann dabei an der Laufschiene 2 angeschweißt oder angeklebt sein oder über mechanische Mittel fixiert werden. Von der Abdeckung 21 steht ein stegförmiges federndes Anschlagselement 22 hervor, das eine Oberseite der Laufschiene 2 überragt und an einem Rand 16 des Schubelementes 14 anliegt. Wird nun die Auszugsführung mit der Laufschiene 2 ruckartig in Öffnungs- und/oder Schließrichtung bewegt, kann bei Erreichen der Endposition ein abruptes Anhalten der Laufschiene 2 erfolgen, was durch das federnde Anschlagselement 22 kompensiert wird, das aus der Ausgangsposition um einen Federweg ausgelenkt werden kann, um laute Anschlagsgeräusche zu vermeiden.

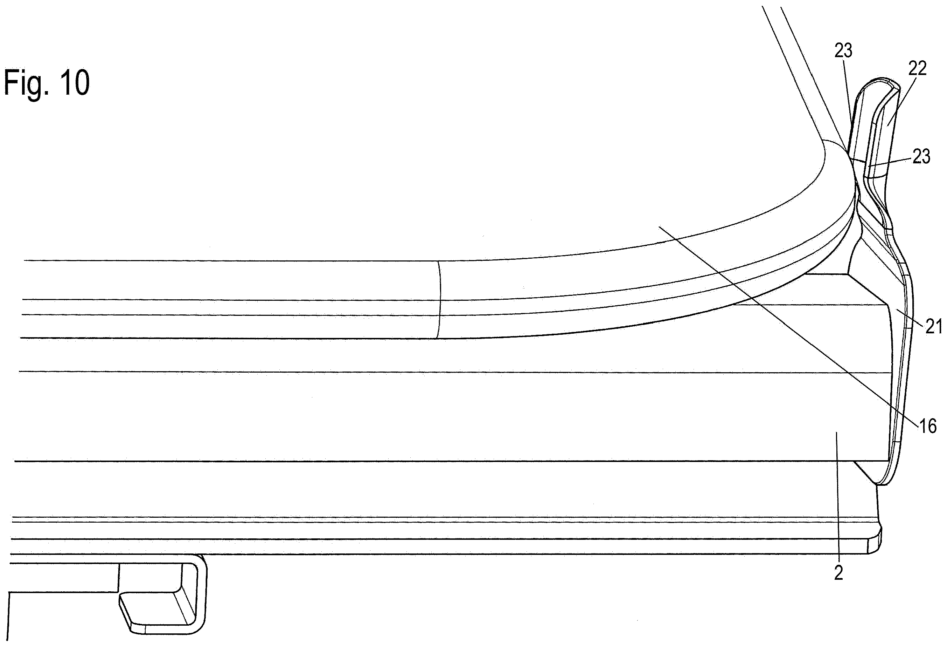

In Figur 10 ist das federnde Anschlagselement 22 in einer ausgelenkten Position gezeigt, bei der der Rand 16 das Anschlagselement 22 verbiegt. Das federnde Anschlagselement 22 ist dabei als U-förmiger Steg ausgebildet, der an zwei Kontaktflächen 23 an den Rand 16 anlegbar ist.

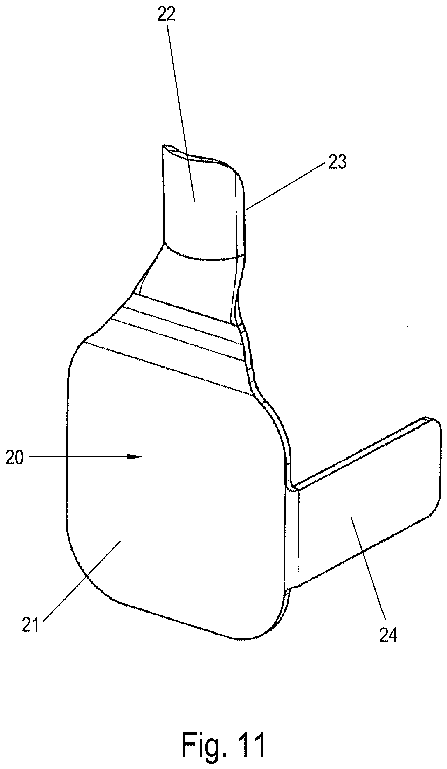

In Figur 11 ist der Anschlag 20 im Detail gezeigt, der aus einem gebogenen und gestanzten Metallblech hergestellt ist. An der Abdeckung 21 steht ein Haltesteg 24 winklig hervor, der an einer Seitenwand der Laufschiene 2 fixiert wird, beispielsweise durch Schweißen.

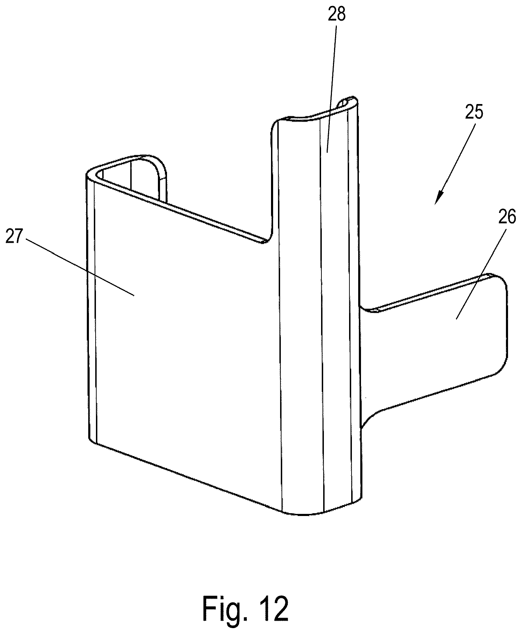

In Figur 12 ist ein modifizierter Anschlag 25 gezeigt, der über einen Haltesteg 26 an einer Seitenwand einer Laufschiene 2 fixiert werden kann. Der Anschlag 25 umfasst eine rückseitige Abdeckung 27, die eine Öffnung der Laufschiene 2 überdeckt, und ein nach oben ragendes federndes Anschlagselement 28, das als Federsteg ausgebildet ist Im Übrigen ist die Funktionalität des Anschlages 25 wie bei den vorangegangenen Ausführungsbeispielen ausgebildet.

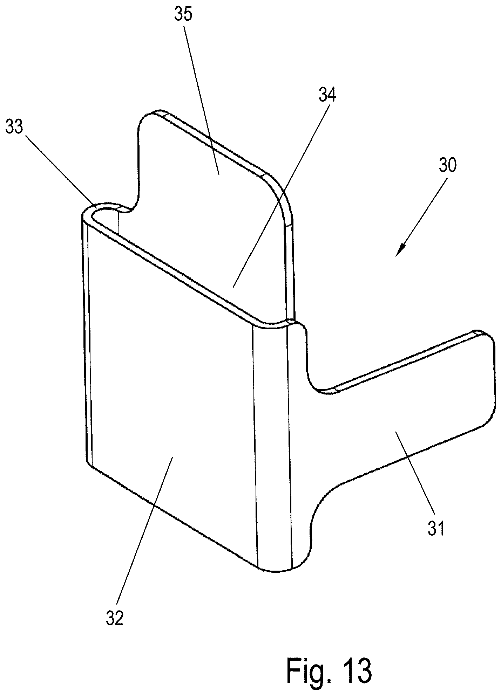

In Figur 13 ist ein Anschlag 30 gezeigt, der einen Haltesteg 31 aufweist, der an einer Seitenwand der Laufschiene 2 fixiert werden kann, beispielsweise durch Schweißen oder Kleben. Von dem Haltesteg 31 erstreckt sich eine rückseitige Abdeckung 32, die eine Öffnung der Laufschiene 2 stirnseitig überdeckt. Auf der zu dem Haltesteg 31 gegenüberliegenden Seite ist eine Umbiegung 33 vorgesehen, die das Metallblech um etwa 180° biegt und die integral mit einem plattenförmigen federnden Anschlagselement 35 ausgebildet ist, das an einer Platte 34 ausgebildet ist und eine Laufschiene 2 nach oben überragt, um einen federnden Anschlag für ein Schubelement 14 auszubilden. Wenn der Anschlag 30 an dem Haltesteg 31 festgelegt ist, ergibt sich eine besonders flexible federnde Lagerung des Anschlagselementes 35 durch die zahlreichen Umbiegungen an dem Metallblech.

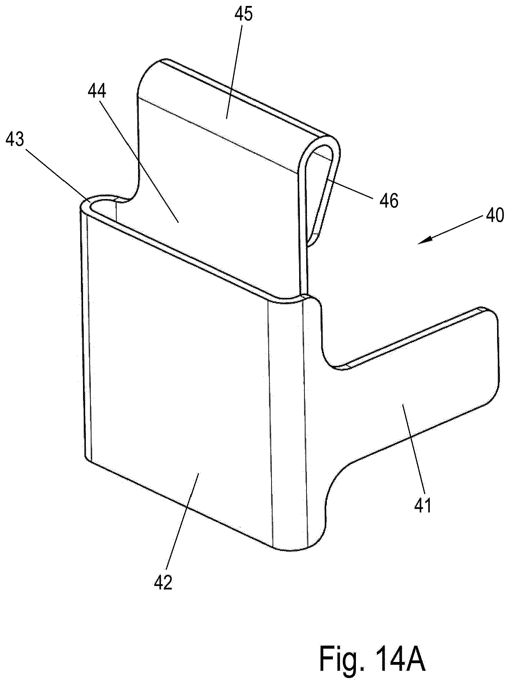

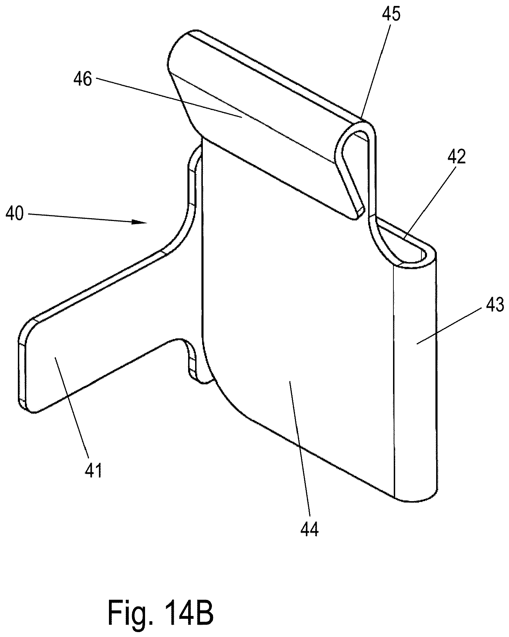

In den Figuren 14A und 14B ist ein weiteres Ausführungsbeispiel eines Anschlages 40 gezeigt, der über einen Haltesteg 41 an einer Seitenwand einer Laufschiene 2 festgelegt werden kann. Der Anschlag 40 umfasst eine rückseitige Abdeckung 42, die eine stirnseitige Öffnung der Laufschiene 2 überdecken kann. Ähnlich wie bei dem Ausführungsbeispiel der Figur 13 ist die Abdeckung 42 über eine Umbiegung 43 mit einem Wandelement 44 verbunden, das an der Oberseite ein federndes Anschlagselement 45 aufweist. Das Anschlagselement 45 ist schlaufenförmig gebogen und weist eine Vorderkante 46 auf, an die ein Rand 16 eines Schubelementes 14 anlegbar ist. Auch bei dieser Ausführungsform ergeben sich besonders elastische Federverhältnisse durch die elastische Lagerung des abfedernden Anschlagselementes 45 relativ zu dem fixierten Haltesteg 41.

Eine erfindungsgemäße Auszugsführung kann einen oder zwei federnde Anschläge aufweisen, wobei vorzugsweise bei einem Möbel oder Haushaltsgerät an gegenüberliegenden Seiten jeweils Auszugführungen vorgesehen sind, auf denen ein Schubelement 14 abgelegt ist. Dabei können wahlweise beide Auszugführungen oder nur eine der beiden Auszugsführungen einen oder mehrere federnde Anschläge aufweisen, um laute Anschlaggeräusche zu vermeiden, wenn die Laufschiene der Auszugsführung in eine Endposition bewegt wird.

### Bezugszeichenliste

- 2: Laufschiene
- 3: Befestigungsteil
- 4: Befestigungsteil
- 5, 5': Anschlag
- 6: Abdeckung
- 7: Haltesteg
- 8: Anschlagselement
- 10: Halteabschnitt
- 11: Vorsprung
- 12: Aussparung
- 13: Anschlagselement
- 14: Schubelement
- 15: Wanne
- 16: Rand
- 17: Haken
- 18: Vorsprung
- 20: Anschlag
- 21: Abdeckung
- 22: Anschlagselement
- 23: Kontaktfläche
- 24: Haltesteg
- 25: Anschlag
- 26: Haltesteg
- 27: Abdeckung
- 28: Anschlagselement
- 30: Anschlag
- 31: Haltesteg
- 32: Abdeckung
- 33: Umbiegung
- 34: Platte
- 35: Anschlagselement
- 40: Anschlag
- 41: Haltesteg
- 42: Abdeckung
- 43: Umbiegung
- 44: Wandelement
- 45: Anschlagselement
- 46: Vorderkante
- L: Abstand

## Patentansprüche

1. Auszugsführung, insbesondere für Haushaltsgeräte, mit einer stationären Führungsschiene und einer relativ zu der Führungsschiene verfahrbar gelagerten Laufschiene (2), auf der ein zu bewegendes Schubelement (14) abgestützt ist, wobei an der Laufschiene (2) mindestens ein Anschlag (5, 5', 13, 20, 25, 30, 40) zur Begrenzung der Bewegung des Schubelementes (14) zu der Laufschiene (2) vorgesehen ist, wobei der mindestens eine Anschlag (5, 5', 13, 20, 25, 30, 40) für das Schubelement (14) federnd ausgebildet ist, **dadurch gekennzeichnet, dass** der federnde Anschlag (5, 5', 13, 20, 25, 30, 40) an einer Seite der Laufschiene (2) integral mit einem Rastmechanismus zum lösbaren Fixieren der Laufschiene (2) in einer Auszugsposition vorgesehen ist.

2. Auszugsführung nach Anspruch 1, **dadurch gekennzeichnet, dass** der Federweg eines federnden Anschlagselementes (8, 13, 22, 28, 35, 46) beim Aufprall des Schubelementes (14) in einem Bereich zwischen 0,5 mm bis 10 mm, insbesondere 1 mm bis 8 mm, beträgt.

3. Auszugsführung nach Anspruch 1 oder 2, **dadurch gekennzeichnet, dass** der Anschlag (5, 5', 13, 20, 25, 30, 40) aus einem Metallblech hergestellt ist.

4. Auszugsführung nach einem der vorhergehenden Ansprüche, **dadurch gekennzeichnet, dass** der Anschlag (5, 5', 13, 20, 25, 30, 40) benachbart zu einer Stirnseite der Laufschiene (2) fixiert ist.

5. Auszugsführung nach einem der vorhergehenden Ansprüche, **dadurch gekennzeichnet, dass** der Anschlag (5, 5', 13, 20, 25, 30, 40) integral mit einer Abdeckung (6, 21, 27, 32, 42) ausgebildet ist, die eine Stirnseite der Auszugsführung (2) überdeckt.

6. Auszugsführung nach einem der vorhergehenden Ansprüche, **dadurch gekennzeichnet, dass** der Anschlag (5, 5', 13, 20, 25, 30, 40) eine elastische Wegbegrenzung für die Relativbewegung der Laufschiene zur Führungsschiene oder Mittelschiene darstellt

7. Auszugsführung nach einem der vorhergehenden Ansprüche, **dadurch gekennzeichnet, dass** an gegenüberliegenden Seiten der Laufschiene (2) jeweils ein federnder Anschlag (5, 5', 13, 20, 25, 30, 40) vorgesehen ist.

8. Auszugsführung nach einem der vorhergehenden Ansprüche, **dadurch gekennzeichnet, dass** der Anschlag (5, 5', 13, 20, 25, 30, 40) an der Laufschiene (2) verschweißt, verschraubt, oder auf andere Weise befestigt ist.

9. Auszugsführung nach einem der vorhergehenden Ansprüche, **dadurch gekennzeichnet, dass** der Anschlag (5, 5', 13, 20, 25, 30, 40) ein oder mehrere Aussparungen aufweist oder lokal geschwächt ist, um die federnde Eigenschaft zu erhöhen.

10. Auszugsführung nach einem der Ansprüche 1 bis 9, **dadurch gekennzeichnet, dass** der Anschlag (5, 5', 13, 20, 25, 30, 40) an der Laufschiene (2) verrastet ist.

11. Haushaltsgerät, insbesondere Backofen, mit mindestens einer Auszugsführung nach einem der vorhergehenden Ansprüche.

12. Haushaltsgerät nach Anspruch 11, **dadurch gekennzeichnet, dass** an gegenüberliegenden Seiten des Schubelementes (14) eine Auszugsführung vorgesehen ist und mindestens eine von beiden Auszugsführungen feinen federnden Anschlag (5, 5', 13, 20, 25, 30, 40) aufweist.

13. Haushaltsgerät nach Anspruch 11 oder 12, **dadurch gekennzeichnet, dass** das Schubelement (14) als Gargutträger ausgebildet ist.

## Claims

1. Pull-out guide (1), in particular for domestic appliances, comprising a stationary guide rail and a running rail (2) which is movably mounted relative to the guide rail and on which a moving push element (14) is supported, wherein at least one stop (5, 5', 13, 20, 25, 30, 40) for limiting the movement of the push element (14) relative to the running rail (2) is provided on the running rail (2), whereby the at least one stop (5, 5', 13, 20, 25, 30, 40) for the push element (14) is designed in a resilient manner, **characterized in that** the resilient stop (5, 5', 13, 20, 25, 30, 40) on one side of the running rail (2) is provided integrally with a latching mechanism for releasably fixing the running rail (2) in a pulled-out position.

2. Pull-out guide according to claim 1, **characterized in that** the spring travel of a resilient stop element (8, 13, 22, 28, 35, 46) when struck by the push element (14) lies in a range between 0.5 mm to 10 mm, in particular 1 mm to 8 mm.

3. Pull-out guide according to claim 1 or 2, **characterized in that** the stop (5, 5', 13, 20, 25, 30, 40) is made of a metal sheet.

4. Pull-out guide according to one of the preceding claims, **characterized in that** the stop (5, 5', 13, 20, 25, 30, 40) is fixed in place adjacent to an end face of the running rail (2).

5. Pull-out guide according to one of the preceding claims, **characterized in that** the stop (5, 5', 13, 20, 25, 30, 40) is formed integrally with a cover (6, 21, 27, 32, 42) which covers an end face of the pull-out guide (2).

6. Pull-out guide according to one of the preceding claims, **characterized in that** the stop (5, 5', 13, 20, 25, 30, 40) constitutes an elastic travel limiter for the relative movement of the running rail relative to the guide rail or centre rail.

7. Pull-out guide according to one of the preceding claims, **characterized in that** a resilient stop (5, 5', 13, 20, 25, 30, 40) is provided in each case on opposite sides of the running rail (2).

8. Pull-out guide according to one of the preceding claims, **characterized in that** the stop (5, 5', 13, 20, 25, 30, 40) is welded, screwed or fastened in some other way to the running rail (2).

9. Pull-out guide according to one of the preceding claims, **characterized in that** the stop (5, 5', 13, 20, 25, 30, 40) has one or more cutouts or is locally weakened in order to increase the resilient effect.

10. Pull-out guide according to one of claims 1 to 9, **characterized in that** the stop (5, 5', 13, 20, 25, 30, 40) is latched onto the running rail (2).

11. Domestic appliance, in particular an oven, comprising at least one pull-out guide according to one of the preceding claims.

12. Domestic appliance according to claim 11, **characterized in that** a pull-out guide is provided on opposite sides of the push element (14) and at least one of the two pull-out guides (1) has a resilient stop (5, 5', 13, 20, 25, 30, 40).

13. Domestic appliance according to claim 11 or 12, **characterized in that** the push element (14) is designed as a support for food to be cooked.

## Revendications

1. Guide d'extraction, en particulier pour des appareils ménagers, avec un rail de guidage fixe et un rail coulissant (2) supporté de façon mobile par rapport au rail de guidage, sur lequel un élément de tiroir (14) à déplacer est supporté, dans lequel il est prévu sur le rail coulissant (2) au moins une butée (5, 5', 13, 20, 25, 30, 40) destinée à limiter le déplacement de l'élément de tiroir (14) par rapport au rail coulissant (2), l'au moins une butée (5, 5', 13, 20, 25, 30, 40) étant conçue de façon élastique pour l'élément de tiroir (14), **caractérisé en ce que** la butée élastique (5, 5', 13, 20, 25, 30, 40) est prévue sur un côté du rail coulissant (2) solidaire d'un mécanisme d'enclenchement pour la fixation pouvant être défaite du rail coulissant (2) dans une position d'extraction.

2. Guide d'extraction selon la revendication 1, **caractérisé en ce que** la course d'élasticité d'un élément de butée élastique (8, 13, 22, 28, 35, 46) lors de l'impact de l'élément de tiroir (14) se situe dans une plage de 0,5 mm à 10 mm, en particulier de 1 mm à 8 mm.

3. Guide d'extraction selon la revendication 1 ou 2, **caractérisé en ce que** la butée (5, 5', 13, 20, 25, 30, 40) est faite d'une tôle métallique.

4. Guide d'extraction selon l'une des revendications précédentes, **caractérisé en ce que** la butée (5, 5', 13, 20, 25, 30, 40) est fixée au voisinage d'une face d'extrémité du rail coulissant (2).

5. Guide d'extraction selon l'une des revendications précédentes, **caractérisé en ce que** la butée (5, 5', 13, 20, 25, 30, 40) est conformée d'un seul tenant avec un cache (6, 21, 27, 32, 42) qui recouvre une face d'extrémité du guide d'extraction (2).

6. Guide d'extraction selon l'une des revendications précédentes, **caractérisé en ce que** la butée (5, 5', 13, 20, 25, 30, 40) représente une limite de course élastique pour le mouvement relatif du rail coulissant par rapport au rail de guidage ou au rail intermédiaire.

7. Guide d'extraction selon l'une des revendications précédentes, **caractérisé en ce qu'**une butée élastique (5, 5', 13, 20, 25, 30, 40) est prévue sur des côtés opposés du rail coulissant (2).

8. Guide d'extraction selon l'une des revendications précédentes, **caractérisé en ce que** la butée (5, 5', 13, 20, 25, 30, 40) est soudée, vissée ou fixée d'une autre manière sur le rail coulissant (2).

9. Guide d'extraction selon l'une des revendications précédentes, **caractérisé en ce que** la butée (5, 5', 13, 20, 25, 30, 40) présente une ou plusieurs découpes ou est affaiblie localement afin d'augmenter son effet de ressort.

10. Guide d'extraction selon l'une des revendications 1 à 9, **caractérisé en ce que** la butée (5, 5', 13, 20, 25, 30, 40) est enclenchée sur le rail coulissant (2).

11. Appareil ménager, en particulier four de cuisson, avec au moins un guide d'extraction selon l'une des revendications précédentes.

12. Appareil ménager selon la revendication 11, **caractérisé en ce que** des guides d'extraction sont prévus sur des faces opposées de l'élément de tiroir (14) et au moins un des deux guides d'extraction présente une butée élastique (5, 5', 13, 20, 25, 30, 40).

13. Appareil ménager selon la revendication 11 ou 12, **caractérisé en ce que** l'élément de tiroir (14) est conçu comme support pour des matières à cuire.
